# EUROPÄISCHE PATENTSCHRIFT

(11) **EP 3 713 784 B1**
(45) Veröffentlichungstag und Bekanntmachung des Hinweises auf die Patenterteilung: **07.07.2021**
(21) Anmeldenummer: 18810919.3
(22) Anmeldetag: 15.11.2018
(51) Int. Cl.: B60H 1/00, B60H 1/04, F28D 1/053, F28D 21/00

(54) **TEMPERIEREINRICHTUNG EINES INNENRAUMES ODER VON KOMPONENTEN EINES KRAFTFAHRZEUGES**
TEMPERATURE-CONTROL DEVICE OF AN INTERIOR OR COMPONENTS OF A MOTOR VEHICLE
DISPOSITIF DE RÉGULATION DE TEMPÉRATURE D'UN HABITACLE OU DE COMPOSANTS D'UN VÉHICULE AUTOMOBILE

(30) Priorität: 23.11.2017 DE 102017127697
(43) Veröffentlichungstag der Anmeldung: 30.09.2020
(73) Patentinhaber: Volkswagen AG, 38440 Wolfsburg (DE)
(72) Erfinder: ALBRECHT, Jan-Christoph, 38442 Wolfsburg (DE); WACHSMUTH, Carsten, 38179 Schwülper (DE); ENGLER, Frank, Jürgen, 38448 Wolfsburg (DE)
(74) Vertreter: Scheffler, Jörg
(86) Internationale Anmeldenummer: PCT/EP2018/081384
(87) Internationale Veröffentlichungsnummer: WO 2019/101620

(56) Entgegenhaltungen:
- WO-A1-2011/029538
- DE-A1-102011 108 729
- DE-A1-102012 020 882
- DE-A1-102016 203 045

## Beschreibung

Die Erfindung betrifft eine zum Einsatz in einem Kraftfahrzeug bestimmte Temperiereinrichtung zum Temperieren eines Innenraumes und/oder einer als eine elektrische Traktionskomponente zum Antrieb des Kraftfahrzeuges ausgeführte Komponente eines Kraftfahrzeuges mit wenigstens einem von einem Kühlmittel durchströmbaren Kühlmittelkreislauf, in welchem die elektrische Traktionskomponente sowie ein von der Umgebungsluft anströmbarer erster Wärmeübertrager angeordnet ist, mit wenigstens einem von einem Kältemittel durchströmbaren Kältemittelkreislauf, in welchem wenigstens ein Verdichter zum Verdichten des Kältemittels, wenigstens ein Expansionselement zum Expandieren des Kältemittels, zumindest ein zweiter Wärmeübertrager zum Temperieren der dem Innenraum zuzuführenden Luft und mit wenigstens einem in dem Kühlmittelkreislauf und in dem Kältemittelkreislauf angeordneten dritten Wärmeübertrager zur Übertragung der Wärme zwischen dem Kältemittel und dem Kühlmittel, wobei die Temperiereinrichtung in wenigstens einem Heizbetrieb zum Erwärmen des Innenraumes und in wenigstens einem Kühlbetrieb zum Kühlen des Innenraumes betreibbar ist.

Eine gattungsgemäße Temperiereinrichtung ist beispielsweise aus der DE 10 2016 203 045 A1 bekannt.

Bei aus dem Stand der Technik bekannten Elektrofahrzeugen besteht das Problem, dass im Winter bei kalten Außentemperaturen der Innenraum des Elektrofahrzeugs rein elektrisch über einen elektrischen Heizer beheizt wird. Dies ist besonders ineffizient und reduziert die Reichweite teilweise erheblich. Umgekehrt erfordern hohe Umgebungstemperaturen die Kühlung des Innenraumes.

Bei einigen Elektrofahrzeugen erfolgt die Beheizung bzw. Kühlung des Innenraumes mittels einer Wärmepumpe. Eine solche Wärmepumpe wirkt sich im Vergleich zu einer rein elektrischen Heizung zum Beheizen des Innenraumes weniger negativ auf eine realisierbare elektrische Reichweite aus, über welche das beispielsweise als Hybrid- oder Elektrofahrzeug ausgebildete Fahrzeug elektrisch angetrieben werden kann. Derartige Wärmepumpensysteme greifen auf Wärme aus der Umgebungsluft zurück, indem mithilfe der Wärmepumpe Wärme aus der Umgebung auf ein gegenüber der Umgebung höheres Temperaturniveau angehoben und dann an dem Innenraum zuzuführende Luft und somit an den Innenraum selbst weitergegeben wird.

Die Temperiereinrichtung umfasst hierzu wenigstens einen von einem Kühlmittel durchströmbaren Kühlmittelkreislauf, in welchem die elektrische Antriebskomponente angeordnet ist. Dadurch lässt sich die elektrische Antriebskomponente beispielsweise mittels des Kühlmittels kühlen. Ferner umfasst die Temperiereinrichtung wenigstens einen von einem Kältemittel durchströmbaren Kältemittelkreislauf in einem thermodynamischen Kreisprozess. In dem Kältemittelkreislauf ist wenigstens ein Verdichter zum Verdichten des Kältemittels angeordnet.

Ferner sind in dem Kältemittelkreislauf wenigstens ein Expansionselement zum Expandieren des Kältemittels, wenigstens ein erster Wärmeübertrager zum Temperieren von dem Innenraum zuzuführender Luft und wenigstens ein zweiter Wärmeübertrager zum Temperieren von dem Innenraum zuzuführender Luft angeordnet.

Die Temperiereinrichtung umfasst wenigstens einen in dem Kühlmittelkreislauf und in dem Kältemittelkreislauf angeordneten dritten Wärmeübertrager zum Wärmeaustausch zwischen dem Kältemittel und dem Kühlmittel. Dadurch kann über den dritten Wärmeübertrager ein Wärmeaustausch zwischen dem Kältemittel und dem Kühlmittel stattfinden. Dabei ist die Temperiereinrichtung in wenigstens einem Heizbetrieb zum Erwärmen des Innenraumes und in wenigstens einem Kühlbetrieb zum Kühlen des Innenraumes betreibbar.

Weiterhin offenbart die DE 10 2013 206 630 A1 ein Kühl- und Heizsystem für ein Elektro- oder Hybridfahrzeug und die DE 10 2013 105 747 A1 eine Vorrichtung zur Wärmeverteilung in einem Kraftfahrzeug, insbesondere in einem Hybridfahrzeug.

Herkömmliche Wärmesysteme, bei denen eine Wärmeaufnahme in das Kältemittel aus der Umgebungsluft erfolgt, haben den Nachteil, dass es zu einer Vereisung des Wärmeübertragers bei Temperaturen um den Gefrierpunkt und feuchter Umgebungsluft kommen kann.

Aufgrund von Niederschlag auskondensierter Feuchtigkeit und einer daraus resultierenden Vereisung des Außenwärmeübertragers muss üblicherweise eine aufwändige Enteisungsprozedur durchgeführt werden. Während dieser Zeit muss zur Aufrechterhaltung einer hinreichenden Heizleistung elektrisch zugeheizt werden, was die Effizienz beeinträchtigt. Eine Methode, um den externen Wärmeübertrager von Eis zu befreien, besteht darin, die Wärmepumpe in einem Enteisungsmodus zu betreiben. Im Enteisungsmodus wird Kältemittel über einen Kompressor erhitzt und durch den externen Wärmeübertrager geleitet, um den externen Wärmeübertrager zu erwärmen. Das zum Wärmepumpenkompressor zurückgeleitete Kältemittel kann jedoch eine höhere Temperatur als gewünscht haben. Folglich kann die Leistung des Kompressors der Wärmepumpe herabgesetzt werden, wenn die Wärmepumpe über einen längeren Zeitraum im Enteisungsmodus betrieben wird. Außerdem lassen bekannte Enteisungsverfahren nicht zu, dass der Fahrgastraum beheizt wird, während die Wärmepumpe im Enteisungsmodus betrieben wird

Die DE 10 2016 203 045 A1 beschreibt eine Temperiereinrichtung zum Temperieren eines Innenraumes eines Fahrzeuges, bei der im Heizbetrieb ein mittels eines Wärmeübertragers gezielt bewirkter Wärmeübergang von ausschließlich Umgebungsluft an das Kältemittel unterbleibt und damit dem Problem der Vereisung begegnet werden soll.

Ferner ist in der DE 10 2012 020 882 A1 ein als Mikrokanalkühler bezeichneter Wärmeübertrager für ein Kühlsystem einer Brennkraftmaschine mit einer Vielzahl von rohrförmigen Kühlleitungen in paralleler, zueinander beabstandeter Anordnung beschrieben. Zur Kühlung des die Kühlleitungen durchströmenden Kühlmittels werden diese mit Kühlluft umströmt. Die Wandstärke der Kühlleitungen soll beispielsweise weniger als 1 mm und der Innendurchmesser weniger als 2 mm betragen.

Ferner betrifft die DE 10 2015 218 824 A1 ein Wärmepumpensystem zur Klimatisierung eines Kraftfahrzeuges, insbesondere eines Elektro- oder Hybridfahrzeuges und die DE 10 2015 122 491 A1 ein Kühlsystem eines Kraftfahrzeuges mit einem Wärmetauscher, der zur Durchströmung mit einem ersten Kühlmittel, insbesondere einer Kühlflüssigkeit, und zur Um- oder Durchströmung mit einem zweiten Kühlmittel, insbesondere Kühlluft, vorgesehen ist.

Vor diesem Hintergrund liegt der Erfindung die Aufgabe zugrunde, eine Temperiereinrichtung der eingangs genannten Art wesentlich zu verbessern und insbesondere einen besonders zuverlässigen Betrieb auch unter widrigen Umgebungstemperaturen zu gewährleisten. Insbesondere sollen unerwünschte Einschränkung der Temperierung für den Fahrzeuginsassen vermieden werden.

Diese Aufgabe wird gelöst mit einer Temperiereinrichtung gemäß den Merkmalen des Patentanspruches 1. Die Unteransprüche betreffen besonders zweckmäßige Weiterbildungen der Erfindung.

Erfindungsgemäß ist also eine Temperiereinrichtung vorgesehen, bei welcher der erste Wärmeübertrager als ein Mikrokanalkühler mit einer Vielzahl zumindest abschnittsweise parallel verlaufender Mikrokanäle ausgeführt ist, wobei die Mikrokanäle in mehreren zueinander parallel beabstandet angeordneten Ebenen, insbesondere senkrecht zu einer Anströmrichtung, angeordnet sind. Hierdurch wird in überraschend einfacher Weise durch den Einsatz des Mikrokanalkühlers als Wärmeübertrager zugleich eine Reduzierung des Luftwiderstandes, des Bauraumbedarfs und des Gewichtes des so ausgestatteten Kraftfahrzeuges erreicht, wobei insbesondere auf mehrere separate Kühlvorrichtungen oder Wärmeübertrager für die Traktionskomponente und den Innenraumes verzichtet werden kann. Dadurch lässt sich zudem auch eine Reduzierung des Luftwiderstandes des Kraftfahrzeuges bereits gegenüber einem in der Praxis üblichen Kühler erreichen, wobei durch den Fortfall weiterer Kühler im Luftpfad der vorteilhafte Effekt noch verstärkt werden kann.

Durch die Verwendung nur eines Wärmeübertragers als Mikrokanalkühler kann dieser auf extreme Lastanforderungen, beispielsweise den zeitgleichen Kühlbedarf des Fahrzeuginnenraumes und der Traktionskomponente bzw. einer Schnellladevorrichtung ausgelegt werden. Dadurch ist der Mikrokanalkühler für in einem durchschnittlichen Betriebszustand überdimensioniert, was zu einem sehr effizienten Betrieb der Klimaanlage und der Kühlung führt. Ein möglicher prinzipieller Effizienznachteil durch den zusätzlichen Wärmeübergang zwischen dem Kühlmittel und dem Kältemittel in dem dritten Wärmeübertrager wird dadurch zumindest teilweise kompensiert bzw. je nach Auslegung auch überkompensiert. Für den Betrieb als Wärmepumpe ist der optimale Kühlmittelablauf des Mikrokanalkühlers besonders vorteilhaft, sodass die Wärmepumpe deutlich effizienter unterhalb von 0° C Verdampfungstemperatur arbeiten kann.

Eine besonders vorteilhafte Ausführungsform der Erfindung wird auch dadurch erreicht, dass der Abstand benachbarter Mikrokanäle einer ersten Ebene von dem Abstand benachbarter Mikrokanäle zumindest einer weitere Ebene abweicht. Der vergrößerte Abstand zwischen den einzelnen Mikrokanälen am anströmungsseitigen, luftseitigen Eintritt führt dazu, dass eine Eisbildung deutlich langsamer den luftseitigen Druckverlust ansteigen lässt. Vorteilhaft für die Leistungsfähigkeit des Mikrokanalkühlers ist dabei, dass der Abstand der Mikrokanäle in einem der Luftanströmung abgewandten, hinteren Bereich des Mikrokanalkühlers geringer ist als in einem der Luftströmung zugewandten Bereich und somit der Wärmeübergang verbessert wird. Da typischerweise die Eisbildung und damit die Schichtdicke der Eisschicht an dem luftanströmungsseitigen Bereich des Mikrokanalkühlers, größer ist als die Eisschichtdicke in dem der Luftanströmung abgewandten Bereich des Mikrokanalkühlers ist der geringer Abstand der Mikrokanäle in diesem Bereich unkritisch bezüglich der Zunahme des luftseitigen Druckverlustes.

Eine besonders vorteilhafte Ausgestaltungsform der Erfindung wird auch dann erreicht, wenn der Abstand benachbarter Mikrokanäle einer der Luftanströmung der Umgebungsluft zugewandten Ebene größer ist als der Abstand benachbarter Mikrokanäle zumindest der in Strömungsrichtung der Umgebungsluft dahinter liegenden Ebene. Durch den größeren Abstand der Mikrokanäle am Lufteintritt der Luftanströmung wird die größere Dicke der Eisschicht kompensiert. Im Ergebnis bleibt somit nach dem Eintritt der Vereisung, die je nach Abstand der jeweiligen Ebene von dem Lufteintritt unterschiedliche Schichtdicken erreicht, ein ähnlich großer freier Luftweg in jeder Reihe erhalten.

Darüber hinaus sind die unterschiedlichen Abstände benachbarter Mikrokanäle nicht auf die Mikrokanäle derselben Ebene mit insbesondere senkrechter Ausrichtung gegenüber der Luftanströmung beschränkt. Vielmehr ist gemäß einer weiteren besonders Erfolg versprechenden Abwandlung der Erfindung der Abstand der Ebenen unterschiedlich bemessen, sodass der Abstand benachbarter Mikrokanäle von der Luftströmung unterschiedlich beabstandeter Ebenen entsprechend unterschiedlich bemessen sein kann. Die Mikrokanäle weisen dadurch im Bereich der einströmenden Luft einen größeren Abstand zueinander auf als im Bereich der abströmenden Luft. Beispielsweise kann der Abstand der Mikrokanäle derselben Ebene untereinander genauso groß bemessen sein wie der Abstand benachbarter Mikrokanäle verschiedener Ebenen.

Gemäß einer praxisgerechten Ausgestaltung können die Mikrokanäle in einer der Luftanströmung mit der Umgebungsluft zugewandten Ebene einen Abstand von zumindest 3 mm, vorzugsweise 4 mm bis 6 mm aufweisen, wobei der Abstand benachbarter Mikrokanäle in einer der Luftanströmung abgewandten Ebene weniger als 2 mm, beispielsweise ca. 1 mm betragen kann.

Bei einer weiteren konstruktiv vorteilhaften Ausgestaltungsform ist der Abstand zwischen den Mikrokanälen im Eintrittsbereich zwischen 30 % und 400 % größer als der Abstand zwischen den Mikrokanälen am Austritt des Mikrokanalkühlers. Durch den größeren Abstand der Mikrokanäle am Lufteintritt wird die größere Dicke der Eisschicht zuverlässig kompensiert, indem zumindest näherungsweise ein gleich großer freier Luftweg zwischen den Mikrokanälen und/oder zumindest näherungsweise gleich großer Druckverlust zwischen den Mikrokanälen erhalten wird.

Außerdem hat es sich als besonders Erfolg versprechend erwiesen, wenn die Mikrokanäle zumindest einer Ebene quer zur Luftanströmung durch die Umgebungsluft eine erste Gruppe von Mikrokanälen und die Mikrokanäle zumindest einer weiteren Ebene eine weitere Gruppe von Mikrokanälen bilden und dass die zumindest zwei Gruppen von Mikrokanälen nacheinander von dem Kühlmittel durchströmt werden, wobei in Strömungsrichtung des Kühlmittels zuerst die der Luftanströmung abgewandte Gruppe und anschließend die der Luftanströmung zugewandte Gruppe durchströmt werden.

Indem also vorzugsweise die Durchströmung mit Kühlmittel einer Gruppe von Mikrokanälen in einem der Luftanströmung abgewandten Bereich vor der Durchströmung einer Gruppe von Mikrokanälen in einem der Luftanströmung zugewandten Bereich erfolgt, lässt sich ergänzend oder alternativ zu den unterschiedlichen Abständen benachbarter Mikrokanäle in Abhängigkeit des Abstandes von dem Eintritt der Luftströmung in den Mikrokanalkühler über eine veränderte wasserseitige Verschaltung die Vereisungseigenschaft wesentlich verbessern. Beispielsweise kann so durch einen Kühlmitteldurchlauf nach dem Gegenstromprinzip oder auch nach dem Kreuzgegenstromprinzip die Temperaturdifferenz zwischen dem Kühlmittel und der Luftströmung an den einzelnen Mikrokanälen reduziert werden. Dadurch findet eine für die verschiedenen Mikrokanäle nahezu übereinstimmende Abkühlung der Luft an den einzelnen Mikrokanälen statt. Die Eisbildung erfolgt somit nahezu mit übereinstimmender Geschwindigkeit und Schichtstärke an den einzelnen Mikrokanälen.

Darüber hinaus hat es sich als besonders Erfolg versprechend erwiesen, wenn in dem Kühlmittelkreislauf ein Strömungsleitelement, insbesondere ein Ventil, zur wahlweisen Zuführung des Kühlmittels zu dem dritten Wärmeübertrager und/oder unter Umgehung des dritten Wärmeübertragers zu einem Bypass, welcher der Rückführung zu dem Mikrokanalkühler dient, ausgeführt ist, um so bedarfsweise die Kühlleistung des Mikrokanalkühlers vollständig zur Kühlung der Traktionskomponente zu nutzen. Das Kühlmittel zirkuliert in dieser Funktionsstellung unter Umgehung des dritten Wärmeübertragers in dem Kühlmittekreislauf. Hierzu ist das Strömungsleitelement in Strömungsrichtung des Kühlmittels in dem Kühlmittelkreislauf vorzugsweise hinter der Traktionskomponente angeordnet.

Grundsätzlich ist der Erfindung bereits bei einem auf einen Kühl- oder Heizbetrieb beschränkten Kältemittelkreislauf vorteilhaft anwendbar. Besonderes sinnvoll ist darüber hinaus auch eine Abwandlung der Erfindung, bei welcher in dem Heizbetrieb ein Heizungswärmeübertrager des zweiten Wärmeübertragers und im Kühlbetrieb ein Kühlungs-/ Entfeuchtungswärmeübertrager des zweiten Wärmeübertragers in dem Kältemittelkreislauf zum Kühlen des Innenraumes von dem Kältemittel durchströmt wird. Insbesondere in Verbindung mit einer Umkehrung der Durchströmungsrichtung des Kältemittelkreislaufes kann so eine besonders praxisgerechte und energieeffiziente Umsetzung der erfindungsgemäßen Temperiereinrichtung realisiert werden.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: ein Schaltschema einer erfindungsgemäßen Temperiereinrichtung mit einem als Mikrokanalkühler ausgeführten ersten Wärmeübertrager;
- Fig. 2: eine perspektivische Darstellung des Mikrokanalkühlers;
- Fig. 3: einen Querschnitt durch die Mikrokanäle des Mikrokanalkühlers in einem ersten Betriebszustand;
- Fig. 4: einen Querschnitt durch die Mikrokanäle des Mikrokanalkühlers in einem zweiten Betriebszustand nach einer Vereisung;
- Fig. 5: einen weitere Betriebszustand des Mikrokanalkühlers mit unterschiedlichen, nacheinander durchströmbaren Bereichen.

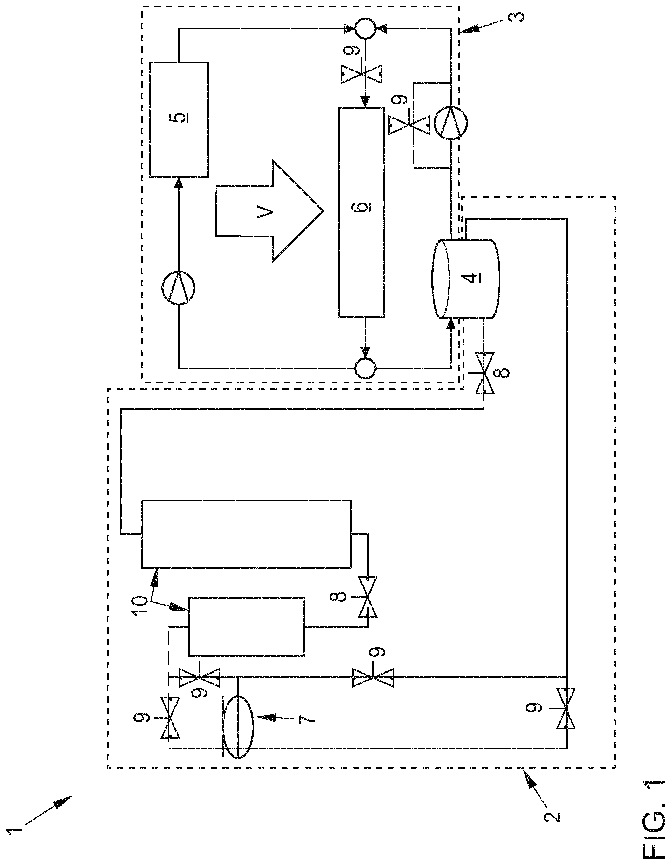

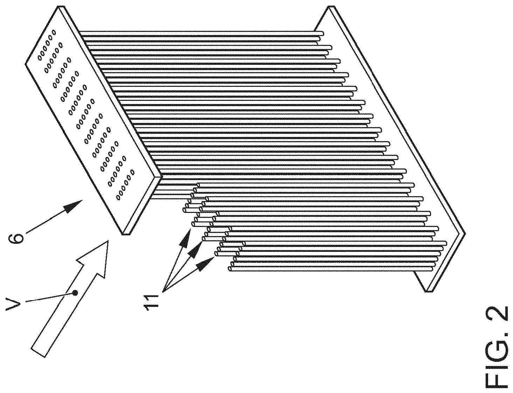

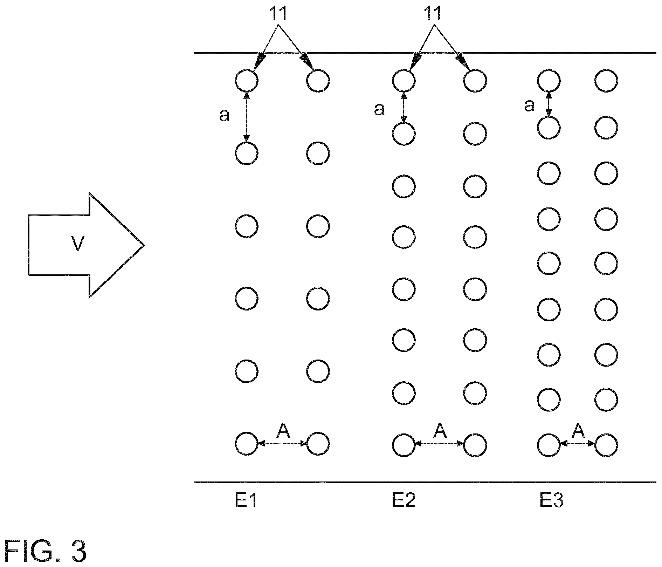

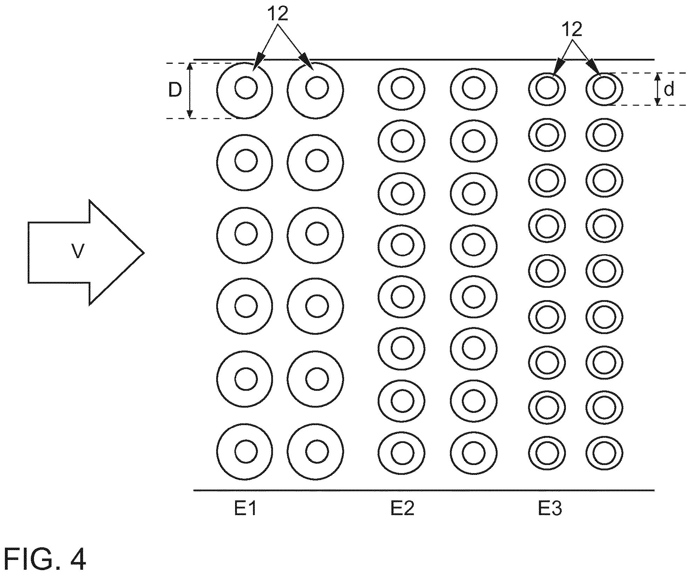

Eine erfindungsgemäße Temperiereinrichtung 1 wird nachstehend anhand der Figuren 1 bis 5 näher erläutert. Hierzu ist die Durchströmung der einzelnen Komponenten zunächst in Figur 1 dargestellt. Wie zu erkennen umfasst die Temperiereinrichtung 1 einerseits einen dem Innenraum zugeordneten Kältemittelkreislauf 2 und einen der Luftanströmung V mit Umgebungsluft ausgesetzten Kühlmittelkreislauf 3. Der Kältemittelkreislauf 2 und der Kühlmittelkreislauf 3 stehen strömungstechnisch getrennt zur Wärmeübertragung durch einen dritten Wärmeübertrager 4 in Verbindung. Der Kältemittelkreislauf 2 der Temperiereinrichtung 1 dient zum Temperieren des Innenraumes des nicht gezeigten Kraftfahrzeuges während in dem von dem Kühlmittel durchströmten Kühlmittelkreislauf 3 eine elektrische Traktionskomponente 5 sowie ein von der Umgebungsluft anströmbarer erster Wärmeübertrager 6 angeordnet ist.

In dem Kältemittelkreislauf 2 sind ein Verdichter 7 zum Verdichten des Kältemittels sowie jeweils mehrere Expansionselemente 8 zum Expandieren des Kältemittels und Sperrventile 9 zur Strömungsleitung angeordnet, sodass diese nach dem Prinzip einer Wärmepumpe in besonders effizienter Weise arbeitet. Ein in den Kältemittelkreislauf 2 eingebundene zweiter Wärmeübertrager 10 zum Temperieren der dem Innenraum zuzuführenden Luft kann durch Umkehrung der Durchströmung in einem Heizbetrieb als Heizungswärmeübertrager und in einem Kühlbetrieb als ein Kühlungs-/Entfeuchtungswärmeübertrager betrieben werden und dient so im Heizbetrieb zum Erwärmen des Innenraumes und im Kühlbetrieb zum Kühlen des Innenraumes.

Erfindungsgemäß ist der erste Wärmeübertrager 6 als ein Mikrokanalkühler mit einer Vielzahl zumindest abschnittsweise parallel verlaufender Mikrokanäle 11 ausgeführt, wobei der Abstand a benachbarter Mikrokanäle 11 in einer ersten Ebene von dem Abstand a benachbarter Mikrokanäle 11 zumindest einer weiteren Ebene abweicht. Darüber hinaus weicht der Abstand A benachbarter Mikrokanäle 11 verschiedener benachbarter Ebenen E1, E2, E3 ab.

Der vergrößerte Abstand a zwischen den einzelnen Mikrokanälen 11 am anströmungsseitigen, luftseitigen Eintritt führt dazu, dass eine in der Praxis im Heizbetrieb des Innenraumes bei niedrigen Umgebungstemperaturen auftretende Eisbildung den luftseitigen Druckverlust nicht oder nur sehr eingeschränkt ansteigen lässt. Vorteilhaft für die Leistungsfähigkeit des Mikrokanalkühlers ist dabei, dass der Abstand a der Mikrokanäle 11 in einem der Luftanströmung V abgewandten, hinteren Bereich des Mikrokanalkühlers geringer ist als in einem der Luftströmung V zugewandten Bereich und somit der Wärmeübergang verbessert wird. Da typischerweise die Eisbildung und damit die Schichtdicke D der Eisschicht 12 an dem luftanströmungsseitigen Bereich des Mikrokanalkühlers größer ist als die Eisschichtdicke d in dem der Luftanströmung V abgewandten Bereich des Mikrokanalkühlers, ist der geringere Abstand a der Mikrokanäle 11 in diesem Bereich unkritisch bezüglich der Zunahme des luftseitigen Druckverlustes.

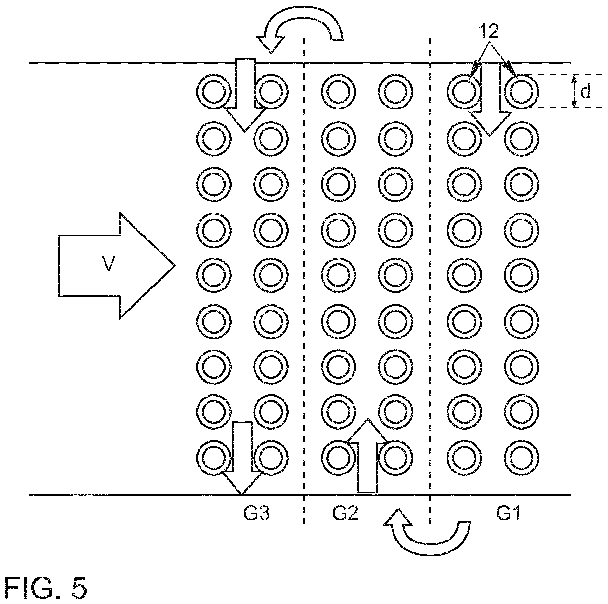

In Figur 5 ist noch eine weitere Variante der Erfindung dargestellt, bei der die Mikrokanäle 11 von jeweils benachbarten Ebenen E1, E2, E3 paarweise zu Gruppen G1, G2, G3 von Mikrokanälen 11 zusammengefasst sind. Die Mikrokanäle 11 der einzelnen Gruppen G1, G2, G3 werden im Betrieb derart nacheinander durchströmt, dass in Strömungsrichtung des Kühlmittels zunächst die der Luftanströmung V abgewandte Gruppe G1 und anschließend die der Luftanströmung V zugewandten weiteren Gruppen G2, G3 durchströmt werden. Dadurch findet eine für die verschiedenen Mikrokanäle 11 nahezu übereinstimmende Abkühlung der Luft an den einzelnen Mikrokanälen 11 statt. Die Eisbildung erfolgt somit nahezu mit übereinstimmender Geschwindigkeit und Schichtdicke d an den einzelnen Mikrokanälen 11.

### Bezugszeichenliste

- 1: Temperiereinrichtung
- 2: Kältemittelkreislauf
- 3: Kühlmittelkreislauf
- 4: Wärmeübertrager
- 5: Traktionskomponente

- 6: Wärmeübertrager
- 7: Verdichter
- 8: Expansionselement
- 9: Sperrventil
- 10: Wärmeübertrager

- 11: Mikrokanal
- 12: Eisschicht

- a, A: Abstand
- d, D: Schichtdicke
- E1, E2, E3: Ebene
- G1, G2, G3: Gruppe
- V: Luftanströmung

## Patentansprüche

1. Eine zum Einsatz in einem Kraftfahrzeug bestimmte Temperiereinrichtung (1) zum Temperieren eines Innenraumes und/oder einer als eine elektrische Traktionskomponente (5) zum Antrieb des Kraftfahrzeuges ausgeführte Komponente eines Kraftfahrzeuges mit wenigstens einem von einem Kühlmittel durchströmbaren Kühlmittelkreislauf (3), in welchem die elektrische Traktionskomponente (5) sowie ein von der Umgebungsluft anströmbarer erster Wärmeübertrager (6) angeordnet ist, mit wenigstens einem von einem Kältemittel durchströmbaren Kältemittelkreislauf (2), in welchem wenigstens ein Verdichter (7) zum Verdichten des Kältemittels, wenigstens ein Expansionselement (8) zum Expandieren des Kältemittels, zumindest ein zweiter Wärmeübertrager (10) zum Temperieren der dem Innenraum zuzuführenden Luft und mit wenigstens einem in dem Kühlmittelkreislauf (3) und in dem Kältemittelkreislauf (2) angeordneten dritten Wärmeübertrager (4) zur Übertragung der Wärme zwischen dem Kältemittel und dem Kühlmittel, wobei die Temperiereinrichtung in wenigstens einem Heizbetrieb zum Erwärmen des Innenraumes und in wenigstens einem Kühlbetrieb zum Kühlen des Innenraumes betreibbar ist, **dadurch gekennzeichnet, dass** der erste Wärmeübertrager (6) als ein Mikrokanalkühler mit einer Vielzahl zumindest abschnittsweise parallel verlaufender Mikrokanäle (11) ausgeführt ist und dass die Mikrokanäle (11) in mehreren zueinander parallel mit einem Abstand (a, A) angeordneten Ebenen (E1, E2) insbesondere senkrecht zu einer Richtung der Luftanströmung (V) angeordnet sind.

2. Temperiereinrichtung (1) nach Anspruch 1, **dadurch gekennzeichnet, dass** der Abstand (a) benachbarter Mikrokanäle (11) in einer ersten Ebene (E1) von dem Abstand (a) benachbarter Mikrokanäle (11) in zumindest einer weiteren Ebene (E2) abweicht.

3. Temperiereinrichtung (1) nach den Ansprüchen 1 oder 2, **dadurch gekennzeichnet, dass** der Abstand (a) benachbarter Mikrokanäle (11) in einer der Luftanströmung (V) zugewandten Ebene (E1) größer ist als der Abstand (a) benachbarter Mikrokanäle (11) in zumindest einer in Strömungsrichtung der Luftanströmung (V) dahinter liegenden Ebene (E2).

4. Temperiereinrichtung (1) nach zumindest einem der vorangehenden Ansprüche, **dadurch gekennzeichnet, dass** der Abstand (A) der Ebenen (E1, E2, E3) unterschiedlich bemessen ist.

5. Temperiereinrichtung (1) nach zumindest einem der vorangehenden Ansprüche, **dadurch gekennzeichnet, dass** die Mikrokanäle (11) zumindest einer Ebene (E1) eine erste Gruppe (G1) von Mikrokanälen (11) und die Mikrokanäle (11) zumindest einer weiteren Ebene (E2) eine weitere Gruppe von Mikrokanälen (11) bilden und dass die zumindest zwei Gruppen (G1, G2, G3) von Mikrokanälen (11) nacheinander von dem Kühlmittel durchströmbar sind.

6. Temperiereinrichtung (1) nach Anspruch 5, **dadurch gekennzeichnet, dass** die Gruppe (G1) von Mikrokanälen (11) in einem der Luftanströmung (V) abgewandten Bereich vor der Gruppe (G2, G3) von Mikrokanälen (11) in einem der Luftanströmung (V) zugewandten Bereich durchströmbar ist.

7. Temperiereinrichtung (1) nach zumindest einem der vorangehenden Ansprüche, **dadurch gekennzeichnet, dass** in dem Kühlmittelkreislauf (3) ein Strömungsleitelement insbesondere ein Sperrventil (9) zur wahlweisen Zuführung des Kühlmittels zu dem dritten Wärmeübertrager (4) und/oder unter Umgehung des dritten Wärmeübertragers (4) zu einem Bypass ausgeführt ist.

8. Temperiereinrichtung (1) nach zumindest einem der vorangehenden Ansprüche, **dadurch gekennzeichnet, dass** das Strömungsleitelement in Strömungsrichtung des Kühlmittels in dem Kühlmittelkreislauf (3) hinter der Traktionskomponente (5) angeordnet ist.

9. Temperiereinrichtung (1) nach zumindest einem der vorangehenden Ansprüche, **dadurch gekennzeichnet, dass** in dem Heizbetrieb ein Heizungswärmeübertrager des zweiten Wärmeübertragers (10) und im Kühlbetrieb ein Kühlungs-/Entfeuchtungswärmeübertrager des zweiten Wärmeübertragers (10) in dem Kältemittelkreislauf (2) zum Kühlen des Innenraumes von dem Kältemittel durchströmbar ist.

10. Temperiereinrichtung (1) nach zumindest einem der vorangehenden Ansprüche, **dadurch gekennzeichnet, dass** die Durchströmungsrichtung des Kältemittelkreislaufes (2) zum Kühlen oder Heizen des Innenraumes umkehrbar ist.

## Claims

1. A temperature control device (1) intended for use in a motor vehicle for controlling the temperature of an interior and/or a component of a motor vehicle, said component being designed as an electric traction component (5) for driving the motor vehicle, having at least one coolant circuit (3) through which a coolant can flow, in which the electric traction component (5) as well as a first heat exchanger (6) through which the ambient air can flow are arranged; having at least one refrigerant circuit (2) through which a refrigerant can flow and in which at least one compressor (7) for compressing the refrigerant, at least one expansion element (8) for expanding the refrigerant, at least one second heat exchanger (10) for controlling the temperature of the air to be supplied to the interior; and having at least one third heat exchanger (4) arranged in the coolant circuit (3) and in the refrigerant circuit (2) for transferring the heat between the coolant and the refrigerant; wherein the temperature control device is operable in at least one heating mode for heating the interior and in at least one cooling mode for cooling the interior, **characterized in that** the first heat exchanger (6) is designed as a microchannel cooler having a plurality of microchannels (11) running in parallel at least in sections, **and in that** the microchannels (11) are arranged in a plurality of planes (E1, E2) arranged parallel to one another with a spacing (a, A), in particular perpendicular to a direction of the incident air flow (V).

2. The temperature control device (1) according to claim 1, **characterized in that** the spacing (a) of adjacent microchannels (11) in a first plane (E1) deviates from the spacing (a) of adjacent microchannels (11) in at least one further plane (E2).

3. The temperature control device (1) according to claims 1 and 2, **characterized in that** the spacing (a) of adjacent microchannels (11) in a plane (E1) facing the incident air flow (V) is greater than the spacing (a) of adjacent microchannels (11) in at least one plane (E2) situated upstream in the flow direction of the incident air flow (V).

4. The temperature control device (1) according to at least one of the preceding claims, **characterized in that** the spacing (A) of the planes (E1, E2, E3) is dimensioned differently.

5. The temperature control device (1) according to at least one of the preceding claims, **characterized in that** the microchannels (11) of at least one plane (E1) form a first group (G1) of microchannels (11), and the microchannels (11) of at least one further plane (E2) form a further group of microchannels (11), **and in that** the coolant can flow successively through at least two groups (G1, G2, G3) of microchannels (11).

6. The temperature control device (1) according to claim 5, **characterized in that** a flow can pass through the group (G1) of microchannels (11) in a region facing away from the incident air flow (V) before the group (G2, G3) of microchannels (11) in a region facing toward the incident air flow (V).

7. The temperature control device (1) according to at least one of the preceding claims, **characterized in that,** in the coolant circuit (3), a flow guide element, in particular a blocking valve (9) for selectively supplying the coolant to the third heat exchanger (4) and/or circumventing the third heat exchanger (4), is designed to form a bypass.

8. The temperature control device (1) according to at least one of the preceding claims, **characterized in that** the flow guide element is arranged in the coolant circuit (3), after the traction component (5) in the direction of flow of the coolant.

9. The temperature control device (1) according to at least one of the preceding claims, **characterized in that,** in the heating mode, the coolant can flow through a heating heat exchanger of the second heat exchanger (10) and, in the cooling mode, the coolant can flow through a cooling/dehumidifying heat exchanger of the second heat exchanger (10) in the refrigerant circuit (2) to cool the interior.

10. The temperature control device (1) according to at least one of the preceding claims, **characterized in that** the flow-through direction of the refrigerant circuit (2) for cooling or heating the interior can be reversed.

## Revendications

1. Dispositif de régulation de température (1) destiné à être utilisé dans un véhicule automobile pour réguler la température d'un habitacle et/ou d'un composant d'un véhicule automobile, réalisé sous la forme d'un composant de traction électrique (5) pour l'entraînement du véhicule automobile, comprenant au moins un circuit de refroidissement (3) pouvant etre traversé par un fluide de refroidissement, dans lequel sont disposés le composant de traction électriques (5) ainsi qu'un premier échangeur thermique (6) qui peut être alimenté par l'air ambiant, comprenant au moins un circuit frigorifique (2) pouvant être traversé par un fluide frigorigène, dans lequel au moins un compresseur (7) pour la compression du fluide frigorigène, au moins un élément d'expansion (8) pour la dilatation du fluide frigorigène, au moins un deuxième échangeur thermique (10) pour réguler la température de l'air fourni à l'habitacle et comprenant au moins un troisième échangeur thermique (4) disposé dans le circuit de refroidissement (3) et dans le circuit frigorifique (2) pour le transfert de la chaleur entre le fluide frigorigène et le fluide de refroidissement, le dispositif de régulation de température pouvant fonctionner dans au moins un mode de chauffage pour chauffer l'habitacle et dans au moins un mode de refroidissement pour refroidir l'habitacle, **caractérisé en ce que** le premier échangeur thermique (6) est conçu comme un refroidisseur à micro-canaux ayant une pluralité de micro-canaux (11) s'étendant au moins par sections en parallèle **et en ce que** les micro-canaux (11) sont disposés dans plusieurs plans (E1, E2) disposés parallèlement entre eux à une distance (a, A) et notamment perpendiculairement à une direction d'afflux d'air (V).

2. Dispositif de régulation de température (1) selon la revendication 1, **caractérisé en ce que** la distance (a) entre des micro-canaux voisins (11) dans un premier plan (E1) est différente de la distance (a) entre des micro-canaux voisins (11) dans au moins un autre plan (E2).

3. Dispositif de régulation de température (1) selon la revendication 1 ou 2, **caractérisé en ce que** la distance (a) entre des micro-canaux voisins (11) dans un plan (E1) orienté dans la direction de l'afflux d'air (V) est supérieure à la distance (a) entre des micro-canaux voisins (11) dans au moins un plan (E2) se trouvant derrière dans la direction d'écoulement de l'afflux d'air (V).

4. Dispositif de régulation de température (1) selon au moins l'une quelconque des revendications précédentes, **caractérisé en ce que** la distance (A) des plans (E1, E2, E3) peut varier.

5. Dispositif de régulation de température (1) selon au moins l'une quelconque des revendications précédentes, **caractérisé en ce que** les micro-canaux (11) d'au moins un plan (E1) forment un premier groupe (G1) de micro-canaux (11) et les micro-canaux (11) d'au moins un autre plan (E2) forment un autre groupe de micro-canaux (11) **et en ce que** les au moins deux groupes (G1, G2, G3) de micro-canaux (11) peuvent être traversés l'un après l'autre par le fluide de refroidissement.

6. Dispositif de régulation de température (1) selon la revendication 5, **caractérisé en ce que** le groupe (G1) de micro-canaux (11) peut être traversé dans une zone à l'opposé de l'afflux d'air (V) avant les groupes (G2, G3) de micro-canaux (11) dans une zone orientée vers l'afflux d'air (V).

7. Dispositif de régulation de température (1) selon au moins l'une des revendications précédentes, **caractérisé en ce qu'un** élément d'orientation d'écoulement, en particulier une soupape d'arrêt (9), est présent dans le circuit de refroidissement (3) pour l'orientation sélective du fluide de refroidissement vers le troisième échangeur thermique (4) et/ou en contournant le troisième échangeur thermique (4) vers une dérivation.

8. Dispositif de régulation de température (1) selon au moins l'une quelconque des revendications précédentes, **caractérisé en ce que** l'élément d'orientation d'écoulement est disposé dans la direction d'écoulement du fluide de refroidissement dans le circuit de refroidissement (3) derrière le composant de traction (5).

9. Dispositif de régulation de température (1) selon au moins l'une quelconque des revendications précédentes, **caractérisé en ce que,** dans le mode de chauffage, un échangeur thermique de chauffage du deuxième échangeur thermique (10) peut être traversé par le fluide frigorigène et, en mode de refroidissement, un échangeur thermique de refroidissement/déshumidification du deuxième échangeur thermique (10) dans le circuit de fluide frigorigène (2) peut être traversé par le fluide frigorigène pour refroidir l'habitacle.

10. Dispositif de régulation de température (1) selon au moins l'une quelconque des revendications précédentes, **caractérisé en ce que** la direction d'écoulement du circuit de fluide frigorigène (2) peut être inversée pour refroidir ou chauffer l'habitacle.
